Europäisches Patentamt

(19) European Patent Office

Office européen des brevets

(11) Publication number: **0 007 788**
A2

# (12) EUROPEAN PATENT APPLICATION

(21) Application number: **79301459.8**

(22) Date of filing: **24.07.79**

(51) Int. Cl.³: **B 65 G 1/04**
**B 66 F 9/06, B 62 D 1/26**

(30) Priority: **25.07.78 GB 3094578**

(43) Date of publication of application:
**06.02.80 Bulletin 80/3**

(84) Designated Contracting States:
**AT BE CH DE FR IT LU NL SE**

(71) Applicant: **LANSING BAGNALL LIMITED**
**Kingsclere Road**
**Basingstoke, Hampshire(GB)**

(72) Inventor: **Wüthrich, Fred**
**Keppelenring 40D**
**CH-3032 Hinter-Kappelen(CH)**

(74) Representative: **Horton, Andrew Robert Grant et al,**
**BOULT, WADE & TENNANT 27 Furnivalstreet**
**London, EC4A 1PQ(GB)**

(54) A warehousing system with an interrupted vehicle guidance track.

(57) A warehousing system including storage racks with an interrupted vehicle guidance track which provides the facility of pallet truck access beneath pallets stacked at the base of the racks. Heretofore raised guidance tracks at ground level have prevented the use of pallet trucks because the truck could not be wheeled over the track. This problem is overcome by a warehousing system the guidance tracks (3) of which have spaces (4) in the positions necessary for the insertion of the pallet truck forks, A stacking vehicle (2) which is guided by the tracks (3) is provided with wheels (5) so arranged that at any time at least two wheels (5) on each side of the vehicle (2) are in engagement with sections of the track (3).

FIG. 1.

# A WAREHOUSING SYSTEM WITH AN INTERRUPTED VEHICLE GUIDANCE TRACK

This invention relates to warehousing systems including guided industrial vehicles servicing rows of racking, in particular, but not exclusively, from which it may be desired to remove floor level pallets by pallet trucks.

Warehouse stacking vehicles are often provided with horizontal guidance by means of wheels engaging with raised guidance tracks extending at floor level along either side of a clear aisle along which the vehicle travels. The presence of these tracks prevents use of pallet trucks because in use they must be wheeled into position under a pallet, which is not possible when, as in this circumstance, the pallet to be collected is on the other side of a raised track.

Accordingly the invention provides a warehousing system comprising a stacking vehicle, at least one row of storage racks open at the front thereof, and a guidance rail which runs along the front of the rack just above the level of the floor, the rail comprising spaced sections arranged to allow access to the racks and to be engaged by guidance wheels, disposed along the side of the vehicle, as the vehicle moves along the row, the guidance wheels and the spaced sections being so arranged that at any time at least two wheels are in contact with a section of the rail.

In a preferred embodiment the storage racks are disposed in a multiplicity of rows separated by aisles, a rail as aforesaid extending along each side of each aisle and the truck having guidance wheels on each side.

An embodiment of the invention will now be described with reference to the accompanying drawings in which:-

Figure 1 is a plan view of the preferred embodiment of the invention;

Figure 2 is a cross-sectional view taken along the line A-A in Figure 1 across the aisle; and

Figure 3 is a cross-sectional view taken along the line B-B in Figures 1 and 2, along the aisle.

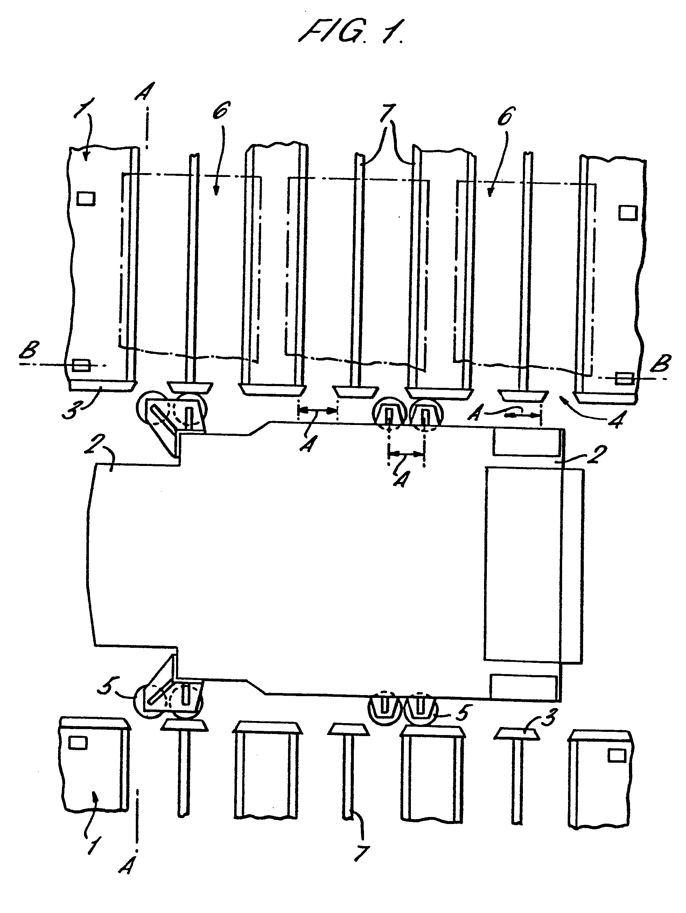

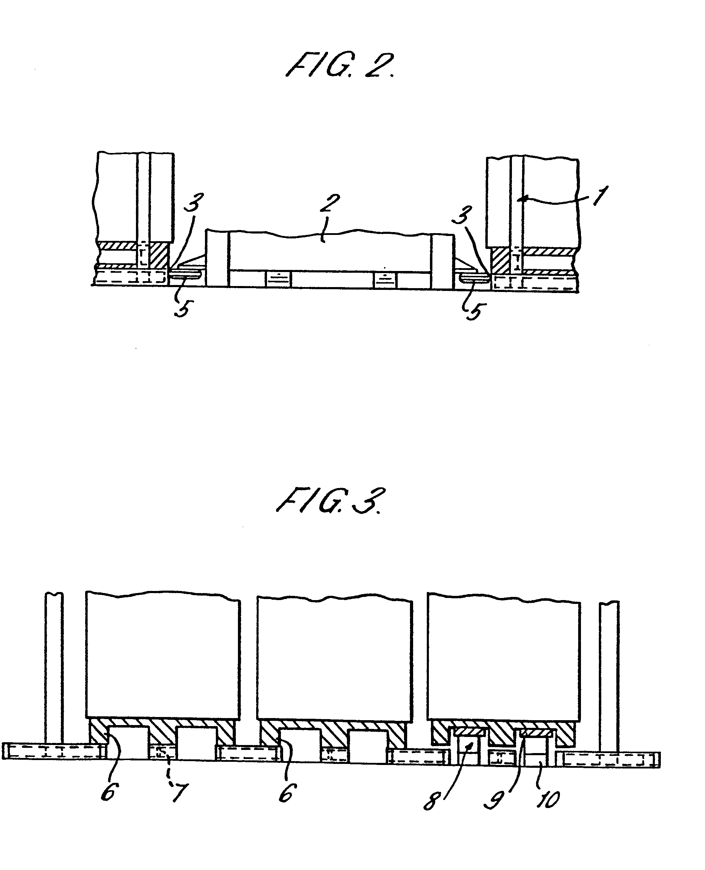

Referring to Figures 1 and 2, warehouse racking, shown generally at 1, is arranged in rows with a clear aisle between each row. A loading vehicle such as a turret truck 2 is positioned to service the racking aisles by manoeuvring along the clear aisle. Along the base of each rack equally spaced rail sections 3 provide guidance tracks which engage with guide wheels 5 extending laterally from the truck. The guide wheels 5 each rotate freely about a respective vertical axis whilst the truck 2 moves along.

The wheels 5 are arranged longitudinally in pairs, with two pairs on either side of the truck 2. For each pair the spacing between wheel centres is no more than, and in this embodiment is the same as, the length A of the gaps 4 between rail sections. This arrangement provides that as a leading wheel of a pair first contacts a section of rail the trailing wheel is just parting from the preceding section of rail. In order that as the leading wheels part from a section of rail, the trailing wheel is just contacting or already upon a section, the minimum length for a section of rail is also equal to A. It is preferable to provide measurement tolerances to allow for erosion of the rails' corners by continual usage.

In Figure 3, pallets 6, also shown in dotted outline in Figure 1, are positioned on the base level of the racking 1. In this embodiment the racking is provided with a base platform 7 so that the pallets are not deposited directly on the ground. The platform 7 extends across the width of the racking row and is in sections lengthwise to maintain the gaps 4 between rail sections 3 across the width of the row. The spacing of the sections of the platform correspond with the spacing between the support beams on the pallet, so that each beam is supported along its length. If it is desired to move a pallet so positioned other than by the forks of turret truck 2, for example by a pallet truck 8, then it becomes necessary to have ground level access into the racking row. In the particular case of a pallet truck the forks 9 are supported on wheels 10 and they can be conveniently guided in through the gaps 4 between rail 3 and platform 7 sections. Once in position the forks 9 may then be hydraulically elevated to lift the pallet 6 off the platform 7 and enable its removal from the row.

The relative dimensions of the racking, rail section length, wheel spacing and gap length are interdependent. In the embodiment shown in the drawings each rack compartment module has space for three pallets along its length. At each end of the module there are two pillars, also comprising the end pillars of the next modules, which support the higher levels of racking. The support platform sections 7 are arranged so that the central beam of the pallets

-5-

6 are supported by a section of platform terminating in short rail sections of length A along each side of the aisle. The spaces for the insertion of the forks extend across the row on either side of this central beam, with the end beams supported on further sections of platform. Since ground access is not required between pallets, a single section of platform and rail may extend between the end beams of neighbouring pallets.

The platform sections 7 provided in the embodiment shown in the drawings are not essential, as the rail sections only could be provided and the lower pallets stacked directly on the ground. However utilising platform sections may assist in the firm securing of the rail sections. Alternatively, the tracking could be formed integrally with the platform.

When standard pallets for example of 800mm x 1200mm, are used with fork entry aperture heights of 100mm, then a guidance rail height of 80mm is particularly suitable, since this enables hand pallet trucks which are provided with an elevation capability of 205mm to lift the pallets off the platform supports and over the rails with a clearance of 25mm between these and the bottom of the beams.

Claims:

1. A warehousing system comprising a stacking vehicle, at least one row of storage racks open at the front thereof, and a guidance rail which runs along the front of the rack just above the level of the floor, the rail comprising spaced sections arranged to allow access to the racks and to be engaged by guidance wheels, disposed along the side of the vehicle, as the vehicle moves along the row, the guidance wheels and the spaced sections being so arranged that at any time at least two wheels are in contact with a section of the rail.

2. A warehousing system according to claim 1 in which storage racks are disposed in a multiplicity of rows separated by aisles, a rail as aforesaid extending along each side of each aisle and the truck having guidance wheels on each side.

3. A warehousing system according to claim 1 or claim 2 wherein the racking includes a sectioned base platform, each platform section being disposed rearwardly of the rail sections of each respective row of racks.

4. A warehousing system according to claim 2 wherein said base platform sections are interconnected with said rail sections.

5. A warehousing system according to claim 2 wherein said base platform sections are formed integrally with respective rail sections.

FIG. 1.

FIG. 2.

FIG. 3.